# EUROPÄISCHE PATENTSCHRIFT

(11) **EP 3 643 140 B1**
(45) Veröffentlichungstag und Bekanntmachung des Hinweises auf die Patenterteilung: **03.06.2026**
(21) Anmeldenummer: 18733227.5
(22) Anmeldetag: 19.06.2018
(51) Int. Cl.: H05B 6/68, B27D 5/00, B29B 13/02, B29C 63/00, H05B 6/78

(54) **VERFAHREN UND VORRICHTUNG ZUM THERMISCHEN AKTIVIEREN EINER FUNKTIONSSCHICHT EINES BESCHICHTUNGSMATERIALS**
METHOD AND DEVICE FOR THERMALLY ACTIVATING A FUNCTIONAL LAYER OF A COATING MATERIAL
PROCÉDÉ ET DISPOSITIF SERVANT À ACTIVER THERMIQUEMENT UNE COUCHE FONCTIONNELLE D'UN MATÉRIAU DE REVÊTEMENT

(30) Priorität: 20.06.2017 DE 102017210261
(43) Veröffentlichungstag der Anmeldung: 29.04.2020
(73) Patentinhaber: HOMAG GmbH, 72296 Schopfloch (DE)
(72) Erfinder: WEISS, Ruven, 72275 Alpirsbach (DE); ALBRECHT, Ludwig, 72280 Dornstetten-Aach (DE)
(74) Vertreter: Hoffmann Eitle
(86) Internationale Anmeldenummer: PCT/EP2018/066221
(87) Internationale Veröffentlichungsnummer: WO 2018/234295

(56) Entgegenhaltungen:
- EP-A1- 2 621 246
- EP-A1- 2 965 888
- EP-B1- 0 753 240
- WO-A1-2016/005145
- WO-A2-97/36728
- DE-A1- 102014 006 116

## Beschreibung

### Gegenstand der Erfindung

Die vorliegende Erfindung betrifft ein Verfahren zum thermischen Aktivieren einer Funktionsschicht eines Beschichtungsmaterials. Zudem betrifft die vorliegende Erfindung ein Verfahren zum Aufbringen von Beschichtungsmaterial auf eine Schmalfläche eines Werkstücks und eine Vorrichtung zum Aufbringen von Beschichtungsmaterial auf eine Schmalfläche eines Werkstücks.

### Stand der Technik

Es hat sich bewährt, Flächen von plattenförmigen Werkstücken, insbesondere deren Schnittflächen, sogenannte Werkstückschmalflächen, mit einem streifenförmigen Beschichtungsmaterial, zu beschichten. Zum einen kann so die Schmalfläche an die Eigenschaften der Werkstückoberfläche des Werkstücks angepasst werden ohne ein aufwändiges Nacharbeiten erforderlich zu machen. Zum anderen ist es durch eine derartige Beschichtung möglich, den Kern des Werkstücks mit einem anderen beispielsweise kostengünstigeren Material auszuführen als die nach außen sichtbaren Oberflächen.

Um das Werkstück mit dem Beschichtungsmaterial zu verbinden, wird ein Haftmittel bzw. ein Klebstoff eingesetzt. Hierbei wird insbesondere ein Haftmittel verwendet, welches durch einen Energieeintrag aktiviert wird und erst dann eine belastbare Verbindung zwischen zwei Komponenten (Beschichtungsmaterial und Werkstück) herstellen kann.

Es gibt vielzählige Möglichkeiten, dieses Haftmittel in den Fügeprozess zu integrieren. So schlägt die EP 1 163 864 B1 ein Verfahren vor, in dem eine Kunststoffkante mit einer Haftschicht koextrudiert wird. Dieser Verbund zwischen Beschichtungsmaterial und aktivierbarer Funktionsschicht (oder Haftschicht) wird anschließend beim Aufbringen auf das Werkstück mittels Laserlicht im Bereich des Haftmittels aufgeschmolzen und auf das Werkstück gepresst.

Weiterhin bekannt ist das Aktivieren dieser Funktionsschicht mittels Heißluft. Hierbei wird eine Vorrichtung vorgesehen, die einen gesteuerten Strom von Heißluft auf ein derartiges Beschichtungsmaterial lenkt, um dieses thermisch zu aktivieren, d.h., zu Erwärmen.

Beiden bekannten Verfahren des Aktivierens der Funktionsschicht, also mittels Heißluft und Laser, ist dabei gemein, dass diese genau auf ein bestimmtes Produkt hin optimiert sein müssen, was dazu führt, dass, wenn zum Beispiel andere Eigenschaften für das Haftmittel gefordert sind oder ein unterschiedliches Beschichtungsmaterial verwendet wird, ein generelles Neuanpassen und Optimieren des Fertigungssystems erfolgen muss.

Allerdings wird beispielsweise in der Möbelindustrie eine immer höhere Produktvielfalt nachgefragt aus der sich entsprechende Anforderungen an die Werkzeugmaschinen ableiten. Ähnlich wie in der Modeindustrie wechseln auch Möbelunternehmen in immer kürzeren Zeiträumen ihre Kollektionen und bieten dabei zum Beispiel neue Farbkombinationen oder funktionsübergreifende Möbellinien, die ein aufeinander abgestimmtes Design für unterschiedliche funktionelle Bereiche, wie zum Beispiel Wohnzimmer, Küche und Bad aufweisen. Hinzu kommt, dass nicht nur Möbel für den Privatgebrauch sondern auch für die Industrie herzustellen sind, wie zum Beispiel Büro- oder Labormöbel, die unter Umständen höheren Qualitätsanforderungen unterliegen. Für die herstellende Industrie ist es somit von Vorteil, Fertigungsanlagen mit einer hohen Fertigungstiefe zur Verfügung zu haben, die ohne großen Aufwand eine Anpassung an verschiedenste Produkte möglich machen.

Dabei spielt das Haftmittel eine wichtige Rolle. In Abhängigkeit der Funktion des fertigen Werkstücks muss dieses nämlich entsprechende Eigenschaften aufweisen. Eine Anforderung ist beispielsweise, mit Hilfe des Haftmittels eine sogenannte Nullfuge herzustellen, d. h., dass diese Fuge am späteren Produkt durch das menschliche Auge bestenfalls nicht mehr auszumachen ist. Dies wird beispielsweise dadurch erreicht, dass die Haftmittelschicht sehr dünn ausgeführt wird und/oder farblich mit der Außenschicht des Beschichtungsmaterials übereinstimmt.

Gerade ein derartig dünnes Haftmittel in einem Beschichtungsmaterial macht es jedoch noch aufwendiger und komplizierter einen optimalen Energieeintrag zum Aktivieren der Schicht zu finden. Hierbei muss betont werden, dass möglichst nur das Haftmittel selber, also die Funktionsschicht des Beschichtungsmaterials den Energieeintrag erfahren soll. Wird ein Energieeintrag nicht genau genug geregelt kann es zwei mögliche Folgen geben. Bei einem zu großen Energieeintrag ist mit Verbrennungen der Sichtschicht bzw. Außenschicht und/oder einer Desintegration der Funktionsschicht zu rechnen, was zu einem nicht akzeptablen Endergebnis durch optische/funktionelle Beeinträchtigungen bzw. nicht erfolgtem Verbinden mit dem Werkstück führt. Bei einem zu kleinen Energieeintrag erfolgt keine ausreichende Aktivierung der Funktionsschicht. Folglich kann es auch so zu einem nicht erfolgten oder nicht ausreichenden Verbinden des Beschichtungsmaterials mit dem Werkstück kommen.

Zusammengefasst gibt es mit den Verfahren im Stand der Technik also zwei Herausforderungen. Zum einen ist es schwierig, ein bestehendes System ohne großen Aufwand an verschiedenste Produkte anzupassen. Zum anderen ist ein genaues thermisches Aktivieren, insbesondere bei dünner Funktionsschicht nicht immer möglich.

Ferner offenbart die EP 2 965 888 A1 eine Vorrichtung zur Erwärmung einer Funktionsschicht, bei der innerhalb eines Applikators ein Mikrowellenfeld erzeugt wird. Die EP 2 621 246 A offenbart eine Anordnung und ein Verfahren zur Erwärmung eines Mediums mittels Mikrowellenstrahlung, die ein Mittel zur Generierung von Signalen auf Basis von Halbleiterbauelementen aufweisen kann.

### Darstellung der Erfindung

Aus dem oben erläuterten ergab sich als Aufgabe der vorliegenden Erfindung, ein Verfahren bzw. eine Vorrichtung zum thermischen Aktivieren einer Funktionsschicht eines Beschichtungsmaterials bereitzustellen, das für verschiedenste Beschichtungsmaterialien bzw. damit zu verwendende Werkstücke verwendet werden kann und einfach an neue Kombinationen anzupassen ist. Anders ausgedrückt, war es Aufgabe der vorliegenden Erfindung, ein Verfahren bzw. eine Vorrichtung bereitzustellen, die eine hohe Flexibilität bezüglich des Haftmittels zum Verbinden einer Werkstückfläche mit einem Beschichtungsmaterial aufweist. Eine weitere Aufgabe der Erfindung war es, die oben geschilderten Nachteile des Standes der Technik bezüglich des Aktivierens der thermischen Schicht zu überwinden, insbesondere also ein genaues Aktivieren der Funktionsschicht des Beschichtungsmaterials zu ermöglichen.

Als Lösung stellt die vorliegende Erfindung das Verfahren des Anspruchs 1 und die Vorrichtung des Anspruchs 6 bereit.

Der Erfindung lag dabei die Erkenntnis zugrunde, dass die oben genannten Probleme mittels eines genaueren Steuerns des Energieeintrags zum Aktivieren der Funktionsschicht gelöst werden können. Es wurde weiterhin erkannt, dass die im Stand der Technik gängigen Mittel zum Energieeintrag, d.h. mittels Heißluft oder Laserlicht, nicht in genügendem Maße verbessert werden können, um somit flexibler zu sein und gleichzeitig genauer zu arbeiten. Als Lösung wurde hier das Verwenden von elektromagnetischer Wellenstrahlung, insbesondere im Mikrowellenbereich (ca. 0,3 bis 300 GHz) zum Erzeugen eines Energieeintrags erkannt. Andere mögliche elektromagnetische Wellen umfassen das Infrarotspektrum, das UV-Spektrum, und den Zentimeterwellenlängenbereich.

Herkömmliche Mikrowellengeneratoren arbeiten mittels eines Magnetrons, also einer Vakuum-Laufzeitröhre zur Erzeugung elektromagnetischer Strahlung. Prinzipiell bedingt sind hier Leistung und Frequenz maßgeblich durch die Konstruktion bestimmt und sind somit nicht (ohne weiteres) änderbar. Es wurde weiter erkannt, dass die Verwendung eines Halbleiterwellengenerators diese Nachteile umgehen kann. Die CN 105120549 A stellt hier einen Mikrowellenofen dar, der einen Halbleiterwellengenerator benutzt und zum Erhitzen von Speisen vorgesehen ist.

Insbesondere lässt sich ein herkömmlicher Mikrowellengenerator mit Magnetrontechnik lediglich zweipunktregeln, dies ist auch als Bang-Bang Regelung bekannt. Dies bedeutet, dass eine Regelung lediglich in der Lage ist, unstetig zwischen zwei Ausgangszuständen zu schalten, nämlich volle Leistung oder keine Leistung. Dies liegt, wie oben dargestellt, in der Konstruktion des Magnetrons, das sich lediglich mit voller Leistung betreiben lässt. Somit ist mit dieser Magnetrontechnik Prinzip bedingt keine genaue Regelung möglich wie sie in der Regelungstechnik bekannt ist, nämlich etwa mittels Proportional-Integral-Differential-Regelung (PID-Regelung), was ein kontinuierliches Verstellen einer Stellgröße (also der Leistung des Mikrowellengenerators) erfordern würde.

Für Mikrowellengeneratoren mit Magnetrontechnik gibt es diesbezüglich Lösungsansätze. So können Leistungsdrosseln wie etwa Mehrstabtuner (zum Beispiel 3-Stab-Tuner) verwendet werden. Dies sind jedoch zusätzliche empfindliche Bauteile, die eine genaue Kalibrierung erforderlich machen und dessen Regelung und Abstimmung auch nichttrivial ist, was der oben dargestellten Motivation entgegen läuft.

Des Weiteren sind Mikrowellengeneratoren mit Magnetrontechnik empfindlich gegenüber Vibrationen und Erschütterungen, insbesondere aber nicht ausschließlich beim Betrieb davon. So können derartige Vibrationen und Erschütterungen nicht nur ein Aussetzen der Mikrowellenerzeugung zur Folge haben, sondern auch dass das Magnetron einen bleibenden Schaden nimmt. Gerade in dem vorgesehenen industriellen Umfeld kommt es jedoch häufiger zu solchen Belastungen.

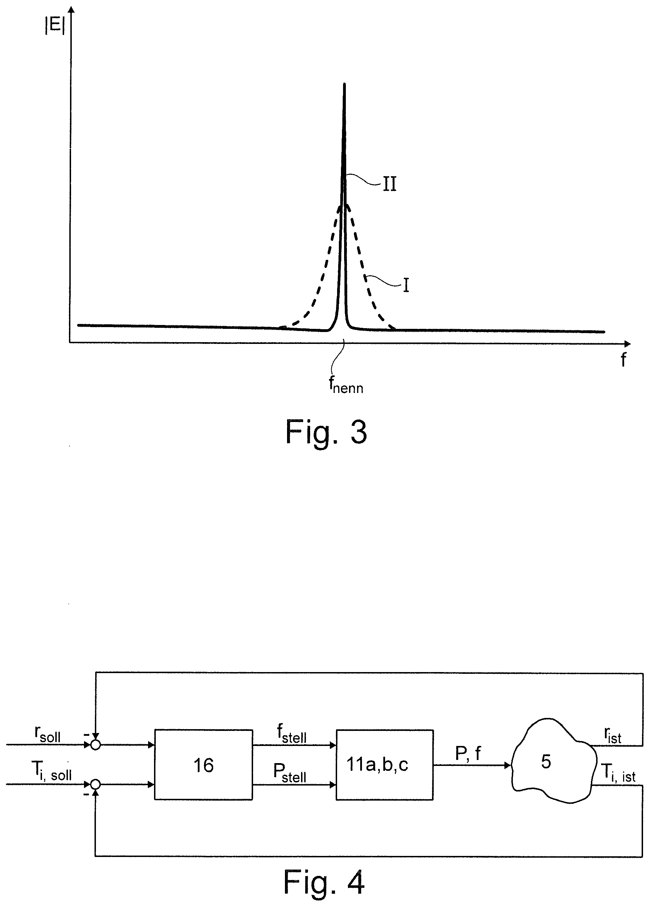

Ferner gibt es einen Unterschied des Sendespektrums von Wellengeneratoren mit Magnetrontechnik (I) und dem dargestellten Halbleiterwellengenerator (II). In Fig. 3 sind diese zwei verschiedenen Sendespektren als Energiebetrag über der Frequenz in einer qualitativen Ansicht dargestellt. Beide Wellengeneratoren haben dieselbe Nennfrequenz, diese kann wie weiter oben dargestellt mit einem Halbleiterwellengenerator (II, kontinuierliche Linie) variabel eingestellt werden und ist bei einem Wellengenerator, der auf Magnetrontechnik basiert (I, nichtkontinuierliche Linie) konstruktiv festgelegt. Es ist zu sehen, dass das Sendespektrum I wesentlich breiter ist und zusätzliche eine geringere Leistungsdichte bei der Nennfrequenz aufweist, während das Sendespektrum II ein sehr enges Spektrum ist und eine höhere Leistungsdichte aufweist.

Durch diese höhere Leistungsdichte bei der Sendefrequenz des Halbleiterwellengenerators kann so ein höherer Energieumsatz in einem Applikator, in dem sich etwa ein zu erwärmender Gegenstand befindet, ermöglicht werden. Dies bedeutet eine größere Effizienz.

In diesem Zusammenhang sei ferner darauf hingewiesen, dass ein in Betrieb nehmen eines Magnetrons ein langsames Einschwingverhalten der zu erzeugenden Leistung beinhaltet. Dieses Einschwingverhalten ist üblicherweise im Sekundenbereich, was mit den Taktzeiten, welche in der Beschichtungstechnik für Flächen von Werkstücken vorherrschen, nicht vereinbar ist. Dies gilt auch für etwaige Leistungsänderungen mittels Mehrstabtunern. Halbleiterwellengeneratoren haben diese zeitliche Verzögerung nicht und reagieren quasi unmittelbar auf eine derartige Veränderung.

In Anbetracht dieser Erkenntnisse stellt die vorliegende Erfindung ein Verfahren zum thermischen Aktivieren einer Funktionsschicht eines Beschichtungsmaterials bereit. Dieses Verfahren weist erfindungsgemäß die folgenden Schritte auf. Zuerst wird das das Beschichtungsmaterial bereitgestellt und Anschließend zu einer Vorrichtung zum thermischen Aktivieren einer Funktionsschicht des Beschichtungsmaterials zugeführt. Somit kann das thermische Aktivieren der Funktionsschicht des Beschichtungsmaterials stattfinden, wobei das thermische Aktivieren der Funktionsschicht des Beschichtungsmaterials durch elektromagnetische Wellen, insbesondere Mikrowellen stattfindet, die von mindestens einem Halbleiterwellengenerator erzeugt werden.

Die Benutzung mindestens eines Halbleiterwellengenerators ermöglicht hier ein exaktes und variables Kontrollieren des thermischen Aktivierungsprozesses der Funktionsschicht. Somit wird unter Verwendung eines oder mehrerer Halbleiterwellengeneratoren ein extrem schnelles Hochfahrverhalten in Bezug auf die Betriebsfähigkeit zum Aufschmelzen und ein extrem genaues Verfahren in Bezug auf das Aufschmelzen der Funktionsschicht eines Kantenbandes erreicht.

Bevorzugt kann das Verfahren zusätzlich die folgenden beiden Schritte aufweisen: Das Erfassen mindestens einer Prozessgröße des Verfahrens und das anschließende Regeln des Halbleiterwellengenerators unter Benutzung dieser Prozessgröße.

Durch eine derartige Regelung kann ein genaues Einstellen des thermischen Aktivierungsvorgangs erreicht werden. Insbesondere kann die mindestens eine Prozessgröße etwa im Feedback-Loop eines PID-Reglers verwendet werden.

Weiter bevorzugt kann die mindestens eine Prozessgröße mindestens die Temperatur der Funktionsschicht des Kantenbandes an einer bestimmten Stelle vor, während oder nach dem thermischen Aktivieren mittels des Halbleiterwellengenerators oder die Leistung, Amplitude oder Phasenlage von einlaufenden oder reflektierten Mikrowellen umfassen.

Dies sind Beispiele für bevorzugte Prozessgrößen, welche eine adäquate Regelung ermöglichen können. Hierbei ist zu beachten, dass zwischen einlaufenden und reflektierten Mikrowellen unterschieden werden kann. Einlaufende Mikrowellen stellen in diesem Zusammenhang Mikrowellen dar, die in dem Halbleiterwellengenerator erzeugt werden und etwa in Richtung eines Werkstücks abgestrahlt werden. Die mittels dieser Mikrowellen transportierte Leistung wird auch als Vorwärtsleistung bezeichnet. Abhängig von den technischen Gegebenheiten und Parametern des Anwendungsfalls besteht zusätzliche eine unterschiedliche Intensität an reflektierten Mikrowellen. Dies sind Mikrowellen, die nicht von der Funktionsschicht des Werkstücks aufgenommen und dessen Energie folglich nicht in Wärmeenergie dissipiert wurde. Dementsprechend ist diese Prozessgröße ein wichtiger Indikator, ob eine eingestellte Nennfrequenz geeignet ist eine Funktionsschicht zu erhitzen, und ein verwendeter Regelalgorithmus kann somit mittels des Regelns bezüglich minimaler reflektierter Mikrowellenleistung auf einen optimalen Energieeintrag in die Funktionsschicht geregelt werden.

Noch weiter bevorzugt besteht die mindestens eine Prozessgröße mindestens mehrere Temperaturen der Funktionsschicht des Kantenbandes an bestimmten Stellen während oder nach dem thermischen Aktivieren mittels des Halbleiterwellengenerators. Somit lässt sich ein bestimmtes und definiertes thermisches Aktivieren der Funktionsschicht des Beschichtungsmaterials zu ermöglichen.

Die Temperatur der Funktionsschicht des Beschichtungsmaterials nach dem Energieeintrag mittels des Halbleiterwellengenerators ist eine Wesentliche Prozessgröße und kann als Hauptprozessgröße bei einem Regelungsvorgang verwendet werden. Um diesen Wert möglichst genau erreichen zu können kann es bevorzugt sein auch weitere Werte vor bzw. während des Erhitzens zu erfassen, um so etwa ein Überhitzen zu vermeiden.

Ein weiterer Aspekt der Erfindung ist ein Verfahren zum Aufbringen von Beschichtungsmaterial auf eine Fläche, insbesondere einer Schmalfläche eines Werkstücks. Dieses Verfahren kann die folgenden Schritte aufweisen: Das thermische Aktivieren einer Funktionsschicht des Beschichtungsmaterials und das anschließende Verpressen des Beschichtungsmaterials mit der Schmalfläche des Werkstücks.

Diese bevorzugte Verwendung des im Vorigen dargestellten Verfahrens zum Erhitzen des Beschichtungsmaterials kann es ermöglichen, etwa die eingangs dargestellten Nullfugen zu produzieren.

Die vorliegende Erfindung stellt ferner eine Vorrichtung zum Aufbringen von Beschichtungsmaterial auf eine Schmalfläche eines Werkstücks bereit. Diese Vorrichtung weist eine Vorrichtung zum thermischen Aktivieren einer Funktionsschicht eines Beschichtungsmaterials und eine Pressvorrichtung zum Verpressen des Beschichtungsmaterials mit der Schmalfläche des Werkstücks auf.

Diese bevorzugte Verwendung der nachfolgend dargestellten Vorrichtung zum thermischen Aktivieren des Beschichtungsmaterials kann es ermöglichen, etwa die eingangs dargestellten Nullfugen zu produzieren.

Die Vorrichtung zum thermischen Aktivieren einer Funktionsschicht weist dabei mindestens einen Halbleiterwellengenerator auf, wobei der Halbleiterwellengenerator in der Lage ist elektrische Wellen, bevorzugt Mikrowellen zu erzeugen, welche anschließend in der Lage sind die Funktionsschicht des Beschichtungsmaterials thermisch aktivieren zu können.

Mittels dieser Vorrichtung, die etwa für die Verfahren, die zuvor dargestellt wurden, benutzt werden kann, wird also ein exaktes und variables Kontrollieren des thermischen Aktivierungsprozesses der Funktionsschicht ermöglicht.

Zusätzlich kann diese Vorrichtung bevorzugt einen Wellenleiter aufweisen, der im Halbleiterwellengenerator erzeugte Mikrowellen an den Applikator weiterleitet.

Dieser Wellenleiter ist etwa ein Koaxialkabel oder ein Hohlleiter und dient der Verbindung des Entstehungsortes der Mikrowellen mit dessen eigentlichem Anwendungsort.

Bevorzugt weist die Vorrichtung zusätzlich eine Messwerterfassungseinrichtung und eine Steuerungseinrichtung auf, wobei die Messwerterfassungseinrichtung Messwerte erfassen kann, die bei dem thermischen Aktivieren einer Funktionsschicht eines Beschichtungsmaterials gemessen werden und diese Messwerte anschließend an die Steuerungsvorrichtung weiterzuleiten, und die Steuerungseinrichtung in der Lage ist, mittels empfangener Messwerte den Halbleiterwellengenerator zu regeln oder zu steuern.

So gemessene Messwerte können dadurch in einem Regelungs- oder Steuerungsverfahren als Prozessgrößen verwendet werden, wie dies in Bezug auf das korrespondierende Verfahren zum Aktivieren einer Funktionsschicht eines Beschichtungsmaterials dargestellt wurde. Dies ermöglicht das genauere Erreichen der thermischen Aktivierung der Aktivierungsschicht des Beschichtungsmaterials.

Noch weiter bevorzugt weist die Vorrichtung weiterhin einen zusätzlichen Halbleiterwellengenerator und einen zusätzlichen Applikator auf. Hierbei sind der erste Halbleiterwellengenerator und der zusätzliche Halbleiterwellengenerator weiter bevorzugt derart ausgestaltet, Mikrowellen zu erzeugen, die mittels einer PLL-Synchronisation synchronisiert sind.

Wenn etwa eine Funktionsschicht eines verwendeten Kantenbands einen vergleichsweise hohen Energieeintrag benötigt, so kann es notwendig sein mehrere Halbleiterwellengeneratoren vorzusehen. Diese können das Beschichtungsmaterial gleichzeitig oder sequentiell Erwärmen. Insbesondere bei der gleichzeitigen Erwärmung können die Mikrowellen von den beiden oder mehreren Halbleiterwellengeneratoren eine derartige Phasenverschiebung aufweisen, so dass die resultierende, superpositionierte Mikrowelle unter destruktiver Interferenz leidet. Dies würde dazu führen, dass lokal keine oder weniger Erhitzung stattfindet. Mittels einer PLL-Synchronisation (auch Phasenregelschleife oder "phase-locked loop" genannt) wird hier erreicht, das diese Phasenverschiebung angeglichen wird.

### Kurze Beschreibung der Zeichnungen

Fig. 1 zeigt eine bevorzugte Ausführungsform der erfindungsgemäßen Beschichtungsvorrichtung.
Fig. 2 ist ein funktionales Diagramm einer bevorzugten Ausführungsform der erfindungsgemäßen Beschichtungsvorrichtung.
Fig. 3 zeigt einen Graphen eines Energiebetrags, der über der Frequenz von verschiedenen Mikrowellengeneratoren aufgetragen ist.
Fig. 4 zeigt einen Regelkreis einer bevorzugten Ausführungsform der erfindungsgemäßen Vorrichtung oder des zugehörigen Verfahrens.

### Bevorzugte Ausführungsformen der vorliegenden Erfindung

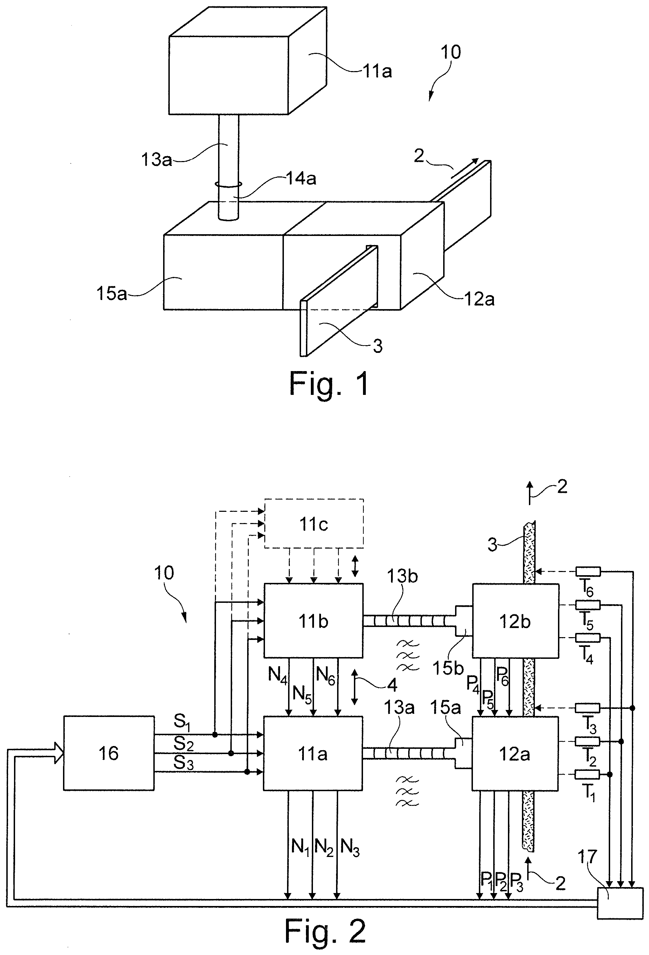

Fig. 1 zeigt eine Ausführungsform der vorliegenden Erfindung. Dabei ist anzumerken, dass in der gezeigten Ausführungsform für ein umfassendes Verständnis der vorliegenden Erfindung eine Vielzahl möglicher Merkmale gezeigt werden, die entsprechend der zuvor genannten allgemeinen Zusammenfassung und der angehängten Ansprüche weggelassen oder auch anderweitig kombiniert werden können.

Fig. 1 zeigt ein Beschichtungsmaterial 3, welches in einer Vorschubrichtung 2 durch einen Applikator 12a einer Vorrichtung zum thermischen Aktivieren einer Funktionsschicht eines Beschichtungsmaterials 10 (nachfolgend Vorrichtung 10 genannt) transportiert wird. Eine etwaige Vorschubvorrichtung ist in dieser Zeichnung nicht dargestellt, ebenso wie eine etwaige Pressvorrichtung zum anschließenden Verpressen des Beschichtungsmaterials. Diese Darstellung konzentriert sich auf die Vorrichtung 10 und seiner Wechselwirkung mit dem Beschichtungsmaterial 3.

Neben dem eingangs erwähnten Applikator 12a weist die Vorrichtung 10 weiterhin einen Halbleiterwellengenerator 11a, einen Wellenleiter 13a, eine Schnittstelle 14a und eine Einkopplung 15a auf.

Im Halbleiterwellengenerator 11a werden hier die Mikrowellen mittels Halbleitertechnik erzeugt. Die genaue Erzeugung bezüglich Energieniveau und Frequenz kann mittels einer Regelungsschleife definiert werden, dies wird in Bezug auf Fig. 2 und 3 weiter erläutert. Die so erzeugten Mikrowellen werden in dem Wellenleiter 13a weitergeleitet. Durch die Schnittstelle 14a ist der Wellenleiter 13a mit der Einkopplung 15a verbunden. Diese Schnittstelle kann so ausgeführt sein, diese beiden Einrichtungen bei Bedarf voneinander zu trennen, etwa im Rahmen einer Wartung oder beim Ersetzen von fehlerhaften Komponenten. Die Einkopplung 15a wiederum ist mit dem Applikator 12a verbunden. Somit erreichen die Mikrowellen das Beschichtungsmaterial 3, um dessen Aktivierungsschicht thermisch zu Aktivieren.

In diesem Zusammenhang muss auch erwähnt werden, dass der Applikator in dieser bevorzugten Ausführungsform als Hohlraumresonator arbeitet und somit bei geeigneter Anregung mit seiner Resonanzfrequenz eine Resonanzsituation innerhalb des Applikators in Bezug auf das Verhalten der elektrischen Feldstärke erzielbar ist. Damit wird die elektrische Feldstärke innerhalb des Applikators erheblich erhöht. Dies hat einen günstigen Effekt auf den Wärmeeintrag in das Beschichtungsmaterial mit hohen dielektrischen Verlusten, welches sich dann leichter auf eine gewünschte Temperatur bringen lässt.

Im Vergleich zu einer herkömmlichen Mikrowellenerzeugung mittels Magnetrons kann die gesamte Vorrichtung 10 durch die Verwendung eines HL-Generators vom Platzbedarf her deutlich kompakter werden. Dies ist insbesondere dadurch begründet, da keine Notwendigkeit besteht, einen separaten Zirkulator zum Zwecke der Ableitung reflektierter Mikrowellen vorzusehen. Es kann vielmehr ein im Halbleiterwellengenerator eingebauter Ableitwiderstand verwendet werden, der die Funktion eines Zirkulators aufnimmt. Weiterhin können die Funktionselemente größtenteils in die Halbleitergeneratorbauform integriert und auch daher deutlich kompakter ausgeführt werden.

Fig. 2 zeigt ein funktionales Diagramm einer bevorzugten Ausführungsform der Vorrichtung. Diese ist gegenüber den Komponenten aus Fig. 1 um die folgenden Komponenten erweitert. So weist die Vorrichtung 10 zusätzlich einen zusätzlichen Halbleiterwellengenerator 11b, einen zusätzlichen Applikator 12b, einen zusätzlichen Wellenleiter 13b, eine zusätzliche Schnittstelle (nicht dargestellt) und eine zusätzliche Einkopplung (nicht dargestellt) auf. Wenn Beispielsweise eine Leistung des Halbleiterwellengenerators 11a nicht ausreichend ist, kann dieser zusätzliche Halbleiterwellengenerator 11b verwendet werden. Zwischen diesen Halbleiterwellengeneratoren 11a und 11b ist eine PLL-Synchronisation vorgesehen, die dafür sorgt, dass eine Phasenabweichung zwischen den Mikrowellen der beiden Halbleiterwellengeneratoren 11a und 11b möglichst gering ist. Somit wird destruktive Interferenz vermieden, die zwar bei der hier dargestellten Ausführungsform mit mehreren Applikatoren 12a und 12b nicht auftreten würde, es jedoch auch ermöglichen würde, die Halbleiterwellengeneratoren 11a und 11b mit einem einzelnen Applikator zu betreiben. Angedeutet ist weiterhin ein weiterer zusätzlicher Halbleiterwellengenerator 11c, welcher die Erzeugung von zusätzlicher Leistung ermöglichen würde. Nicht dargestellt ist ein korrespondierender Applikator 12c, ein Wellenleiter 13c, eine Schnittstelle 14c und eine Einkopplung 15c zum Aufbringen von thermischer Leistung auf einer dritten Position. Bei einer alternativen, nicht dargestellten Ausführungsform können mehrere Halbleiterwellengeneratoren die elektromagnetischen Wellen in einem einzelnen Applikator auf einem Beschichtungsmaterial anwenden. Dies kann bevorzugt sein, da mittels dieser Ausführungsform Kosten für den zusätzlichen Applikator gespart werden können.

Des Weiteren ist die Erfassung und Verarbeitung von Prozessgrößen in dieser Zeichnung dargestellt. So werden Prozessgrößen der Halbleiterwellengeneratoren Nᵢ (im Folgenden abgekürzt zu Prozessgrößen Nᵢ), die aus verschiedenen Prozessgrößen N₁ bis N₃ des Halbleiterwellengenerators 11a, und so weiter, bestehen, zu einer Steuerungseinrichtung 16 weitergeleitet. Beispiele für die Prozessgrößen Nᵢ sind etwa die Frequenz der erzeugten Mikrowellen und deren Leistung (also der Vorwärtsleistung).

Gleiches gilt für die Prozessgrößen der Applikatoren Pᵢ (im Folgenden abgekürzt zu Prozessgrößen Pᵢ), auch diese Prozessgrößen Pᵢ werden zu einer Steuerungseinrichtung 16 weitergeleitet. Beispiele für die Prozessgrößen Pᵢ sind etwa die Frequenz der reflektierten Mikrowellen und deren Leistung (also der Rückwärtsleistung).

Weitere Prozessgrößen können gemessen werden. So wird die Temperatur des fortlaufenden Beschichtungsmaterials an verschiedenen Punkten gemessen, diese Temperaturen sind Prozessgrößen Tᵢ. zum Erfassen dieser Prozessgrößen Tᵢ ist in dieser Ausführungsform eine Messwerterfassungseinrichtung 17 vorgesehen.

Zusammengefasst werden diese Prozessgrößen Nᵢ, Pᵢ und Tᵢ an eine Steuerungseinrichtung 16 weitergeleitet. Diese Steuerungseinrichtung 16 weist beispielsweise einen PID Regler auf, der in der Lage ist, mittels dieser Prozessgrößen Nᵢ*,* Pᵢ und Tᵢ Stellwerte Sᵢ zu erzeugen, die an die Halbleiterwellengeneratoren 11a und 11b weitergeleitet werden. Beispiele für diese Stellwerte Sᵢ sind die Frequenz und Leistung der Halbleiterwellengeneratoren 11a und 11b.

Aufgrund der einstellbaren Sendefrequenz an den Halbleiterwellengeneratoren 11a und 11b kann die Anpassung der Resonanzbedingung an das zu erwärmende Medium, anders als bei einer herkömmlichen Mikrowellenerzeugung mittels Magnetrons, ohne zusätzliche Tuningelemente (wie etwa lineare oder rotatorische Tuner) erfolgen. Die Anpassung kann allein durch die gezielte Steuerung der Sendefrequenz der Halbleiterwellengeneratoren 11a und 11b erzielt werden. Ein verwendetes Medium kann sich daher auch während des Betriebs in seinen Mikrowellen-relevanten Eigenschaften verändern.

Notwendig hierzu ist es lediglich eine reflektierte Leistung abhängig von der Beladung des Applikators mit Beschichtungsmaterial zu messen und in die Berechnung der Stellgröße einfließen zu lassen. Wird beispielsweise das freie Volumen innerhalb des Applikators verkleinert, so erhöht sich typischerweise auch dessen Resonanzfrequenz, daher wird die Sollfrequenz der Mikrowelle der Generators entsprechend verkleinert und umgekehrt.

Hierzu werden mittels geeigneter Messeinrichtungen wie etwa Richtkoppler, die Vorwärts- und Rückwärtsleistung, bzw. die vorwärtsgerichteten und reflektierten Mikrowellen gemessen und in einer Regelschleife zur Einstellung der idealen Frequenz der Mikrowelle berücksichtigt. Dies wird bezüglich Fig. 4 weiter erläutert. Somit ist es möglich, das Verhalten der Leistung der Halbleiterwellengeneratoren 11a und 11b auf das zu erwärmende Medium, also der Funktionsschicht des Nullfugenkantenbandes optimal einstellen.

Die Sendefrequenz kann technisch mittels Frequenzsynthesizer verstellt werden. Damit werden Resonatoren einfacher realisierbar, da die Resonanzbedingung mit Hilfe der Frequenz an die Last angepasst werden kann und somit zusätzliche Tuningelemente entfallen. Dies führt auch zu einer Kostenreduktion und zu einer kompakteren Bauweise des Applikators. Darüber hinaus ist die verbaute Technik vom Umfang her reduziert. Regelungskonzepte, bei denen der Reflexionsfaktor mit Hilfe eines geeigneten Algorithmus auf einen minimalen oder einen gewünschten Wert geregelt wird, sind mit einem HL-Generator geeigneter realisierbar. Überlagerte Prozessregelungen mit weiteren Prozessgrößen werden dadurch einfacher umzusetzen, wie bezüglich Fig. 4 dargestellt werden wird.

In Fig. 3 sind zwei exemplarische Sendespektren von einem Magnetron I und einem Halbleiterwellengenerator II als Energiebetrag über der Frequenz in einer qualitativen Ansicht dargestellt. Beide Mikrowellengeneratoren haben dieselbe Nennfrequenz, diese kann wie weiter oben dargestellt mit einem Halbleiterwellengenerator (II, kontinuierliche Linie) variabel eingestellt werden und ist bei einem Mikrowellengenerator, der auf Magnetrontechnik basiert (I, nichtkontinuierliche Linie) konstruktiv festgelegt. Es ist zu sehen, dass das Sendespektrum I wesentlich breiter ist und zusätzliche eine geringere Leistungsdichte bei der Nennfrequenz aufweist, während das Sendespektrum II ein sehr enges Spektrum ist und eine höhere Leistungsdichte aufweist. Weitere Vorteile und Vergleiche der verschiedenen Technik zum Generieren von Mikrowellen werden im Einführungsabschnitt dargestellt.

Fig. 4 zeigt einen Regelkreis einer bevorzugten Ausführungsform der erfindungsgemäßen Vorrichtung oder des zugehörigen Verfahrens. Es handelt sich hier um einen zweikreisigen Regelkreis, der also eine Regelung bezüglich zwei Parameter vorsieht.

Zum einen wird bezüglich der Prozessgröße Temperatur Tᵢ geregelt. Dies kann als Hauptprozessgröße vorgesehen werden, da die Endtemperatur einer Funktionsschicht eines Beschichtungsmaterials von entscheidender Bedeutung ist. Eine Solltemperatur T_{i,soll} kann für jeden einzelnen Temperaturmesspunkt vorgegeben werden, der möglichst genau zu erreichen ist. Dementsprechend werden die ist-Werte der Temperatur eines Aktivierungsprozesses 5, die den gemessenen Zustandgrößen entsprechen, mittels eines Feedback-Loops in die Steuerungseinrichtung 16 eingebracht.

Eine weitere Prozessgröße ist der Reflektionsfaktor r. Dieser ergibt sich aus einem Vergleich der Vorwärtsleistung, also der Leistung der Halbleiterwellengeneratoren und der Rückwärtsleistung, also der reflektierten Leistung, welche nicht von der Funktionsschicht des Beschichtungsmaterials dissipiert wurde. Ein Verändern dieser Größe ist vor allem über eine Variation der Frequenz zu Erreichen. Dementsprechend können in einem verwendeten Regelalgorithmus diese Größen miteinander verknüpft werden, d.h., bei nicht optimalem Reflektionsfaktor rᵢₛₜ kann eine Variation der Frequenz vorgenommen werden. Der Reflektionsfaktor wird bevorzugt sehr klein, etwa auf höchstens -10 bis -20 dB oder weiter bevorzugt auf 0 geregelt.

Durch eine derartige Regelstrecke ist zudem eine Feldbus- und Steuerungsintegration einfach möglich.

### Bezugszeichenliste

- 2: Vorschubrichtung
- 3: Beschichtungsmaterial
- 4: PLL-Synchronisation
- 5: Prozess des thermischen Aktivieren einer Funktionsschicht eines Beschichtungsmaterials
- 10: Vorrichtung zum thermischen Aktivieren einer Funktionsschicht eines Beschichtungsmaterials
- 11a, 11b, 11c: Halbleiterwellengenerator
- 12a, 12b: Applikator
- 13a, 13b: Wellenleiter
- 14a: Schnittstelle
- 15a, 15b: Einkopplung
- 16: Steuerungseinrichtung
- 17: Messwerterfassungseinrichtung

- I: Sendespektrum des Magnetrons
- II: Sendespektrum des Halbleiterwellengenerators

- f: Frequenz
- fₙₑₙₙ: Nennfrequenz

- E: Energie
- Nᵢ: Prozessgröße des Halbleiterwellengenerators
- P: Leistung
- Pᵢ: Prozessgröße des Applikators
- Sᵢ: Stellgröße Temperatur
- Tᵢ: Prozessgröße Temperatur

## Patentansprüche

1. Verfahren zum thermischen Aktivieren einer Funktionsschicht eines Beschichtungsmaterials (3), wobei das Verfahren die Schritte umfasst:
Bereitstellen des Beschichtungsmaterials (3);
Zuführen des Beschichtungsmaterials (3) zu einer Vorrichtung (10) zum thermischen Aktivieren einer Funktionsschicht des Beschichtungsmaterials; und
thermisches Aktivieren der Funktionsschicht des Beschichtungsmaterials (3),
wobei das thermische Aktivieren der Funktionsschicht des Beschichtungsmaterials (3) durch elektromagnetische Wellen, insbesondere Mikrowellen stattfindet,
**dadurch gekennzeichnet, dass**
die elektromagnetischen Wellen von mindestens einem Halbleiterwellengenerator (11a, 11b, 11c) erzeugt werden.

2. Verfahren nach Anspruch 1, das zusätzlich die folgenden Schritte aufweist:
Erfassen mindestens einer Prozessgröße (Tᵢ, Pᵢ, Nᵢ) des Verfahrens,
Regeln des Halbleiterwellengenerators (11a, 11b, 11c) mithilfe dieser Prozessgröße (Tᵢ, Pᵢ, Nᵢ).

3. Verfahren nach Anspruch 2, wobei
die mindestens eine Prozessgröße (Tᵢ, Pᵢ, Nᵢ) mindestens die Temperatur der Funktionsschicht des Kantenbandes an einer bestimmten Stelle vor, während oder nach dem thermischen Aktivieren mittels des Halbleiterwellengenerators (11a, 11b, 11c) oder die Leistung, Amplitude oder Phasenlage von einlaufenden oder reflektierten Mikrowellen umfasst.

4. Verfahren nach Anspruch 2 oder 3, wobei
die mindestens eine Prozessgröße (Tᵢ, Pᵢ, Nᵢ) mehrere Temperaturen der Funktionsschicht des Kantenbandes an bestimmten Stellen vor, während oder nach dem thermischen Aktivieren mittels des Halbleiterwellengenerators (11a, 11b, 11c) umfasst, um somit ein bestimmtes und definiertes thermischen Aktivieren der Funktionsschicht des Beschichtungsmaterials (3) zu ermöglichen.

5. Verfahren zum Aufbringen von Beschichtungsmaterial (3) auf eine Fläche eines Werkstücks, insbesondere auf eine Schmalfläche, das die folgenden Schritte aufweist:
thermisches Aktivieren einer Funktionsschicht des Beschichtungsmaterials (3) nach einem Verfahren nach einem der Ansprüche 1 bis 4,
Verpressen des Beschichtungsmaterials (3) mit der Schmalfläche des Werkstücks.

6. Vorrichtung zum Aufbringen von Beschichtungsmaterial (3) auf eine Schmalfläche eines Werkstücks, aufweisend:
eine Pressvorrichtung zum Verpressen des Beschichtungsmaterials mit der Schmalfläche des Werkstücks, und
eine Vorrichtung (10) zum thermischen Aktivieren einer Funktionsschicht des Beschichtungsmaterials (3), die aufweist:
mindestens einen Halbleiterwellengenerator (11a, 11b, 11c),
wobei der Halbleiterwellengenerator (11a, 11b, 11c) eingerichtet ist, elektromagnetische Wellen, bevorzugt Mikrowellen zu erzeugen, welche anschließend dazu vorgesehen sind, die Funktionsschicht des Beschichtungsmaterials (3) thermisch zu aktivieren.

7. Vorrichtung (10) nach Anspruch 6, die zusätzlich aufweist:
einen Applikator (12a, 12b, 12c);
einen Wellenleiter, der in der Lage ist im Halbleiterwellengenerator (11a, 11b, 11c) erzeugte elektromagnetische Wellen an den Applikator (12a, 12b, 12c) weiterzuleiten, um dort die Funktionsschicht des Beschichtungsmaterials (3) thermisch zu aktivieren.

8. Vorrichtung (10) nach einem der Ansprüche 6 oder 7, die zusätzlich aufweist:
eine Messwerterfassungseinrichtung (15) und eine Steuerungseinrichtung (16),
wobei die Messwerterfassungseinrichtung (15) ausgestaltet ist, Messwerte zu erfassen, die bei dem thermischen Aktivieren einer Funktionsschicht eines Beschichtungsmaterials (3) gemessen werden und diese Messwerte anschließend an die Steuerungsvorrichtung (16) weiterzuleiten, und
die Steuerungseinrichtung (16) ausgestaltet ist, mittels empfangener Messwerte den Halbleiterwellengenerator (11a, 11b, 11c) zu regeln oder zu steuern.

9. Vorrichtung (10) nach einem der Ansprüche 6 bis 8, die zusätzlich aufweist:
einen zusätzlichen Halbleiterwellengenerator (11a, 11b, 11c) und einen zusätzlichen Applikator (12a, 12b, 12c),
wobei der erste Halbleiterwellengenerator (11a, 11b, 11c) und der zusätzliche Halbleiterwellengenerator (11a, 11b, 11c) derart ausgestaltet sind, Mikrowellen zu erzeugen, die mittels einer PLL-Synchronisation synchronisiert sind.

## Claims

1. Method for thermally activating a functional layer of a coating material (3), wherein the method comprises the steps of:
providing the coating material (3);
supplying the coating material (3) to a device (10) for thermally activating a functional layer of the coating material; and
thermally activating the functional layer of the coating material (3),
wherein the thermal activation of the functional layer of the coating material (3) takes place using electromagnetic waves, in particular microwaves,
**characterised in that**
the electromagnetic waves are generated by at least one semiconductor wave generator (11a, 11b, 11c).

2. Method according to claim 1, additionally having the following steps:
recording at least one process variable (Tᵢ, Pᵢ, Nᵢ) of the method,
controlling the semiconductor wave generator (11a, 11b, 11c) in a closed-loop manner based on this process variable (Tᵢ, Pᵢ, Nᵢ).

3. Method according to claim 2, wherein
the at least one process variable (Tᵢ, Pᵢ, Nᵢ) comprises at least the temperature of the functional layer of the edge band at a particular location before, during or after the thermal activation by the semiconductor wave generator (11a, 11b, 11c) or the power, amplitude or phase position of incoming or reflected microwaves.

4. Method according to claim 2 or 3, wherein
the at least one process variable (Tᵢ, Pᵢ, Nᵢ) comprises multiple temperatures of the functional layer of the edge band at particular locations before, during or after the thermal activation by the semiconductor wave generator (11a, 11b, 11c) in order to thus allow for particular and defined thermal activation of the functional layer of the coating material (3).

5. Method for applying coating material (3) to a surface of a workpiece, in particular to a narrow face, the method having the following steps:
thermally activating a functional layer of the coating material (3) according to a method according to any of claims 1 to 4,
pressing the coating material (3) against the narrow face of the workpiece.

6. Device for applying coating material (3) to a narrow face of a workpiece, having:
a pressing device for presing the coating material against the narrow face of the workpiece, and
a device (10) for thermally activating a functional layer of the coating material (3), the device having:
at least one semiconductor wave generator (11a, 11b, 11c),
wherein the semiconductor wave generator (11a, 11b, 11c) is configured to generate electromagnetic waves, preferably microwaves, which are subsequently intended for thermally activating the functional layer of the coating material (3).

7. Device (10) according to claim 6, additionally comprising:
an applicator (12a, 12b, 12c);
a waveguide, which is capable of transmitting electromagnetic waves generated in the semiconductor wave generator (11a, 11b, 11c) to the applicator (12a, 12b, 12c) in order to thermally activate the functional layer of the coating material (3) there.

8. Device (10) according to any of claims 6 or 7, additionally having:
a measured-value recording device (15) and a control device (16),
wherein the measured-value recording device (15) is designed to record measured values that are measured during thermal activation of a functional layer of a coating material (3) and to subsequently transmit these measured values to the control device (16), and
the control device (16) is designed to control the semiconductor wave generator (11a, 11b, 11c) in a closed-loop or open-loop manner based on received measured values.

9. Device (10) according to any of claims 6 to 8, additionally having:
an additional semiconductor wave generator (11a, 11b, 11c) and an additional applicator (12a, 12b, 12c),
wherein the first semiconductor wave generator (11a, 11b, 11c) and the additional semiconductor wave generator (11a, 11b, 11c) are designed to generate microwaves that are synchronised by means of PLL synchronisation.

## Revendications

1. Procédé d'activation thermique d'une couche fonctionnelle d'un matériau de revêtement (3), dans lequel le procédé comprend les étapes suivantes :
la mise à disposition du matériau de revêtement (3) ;
l'amenée du matériau de revêtement (3) à un dispositif (10) d'activation thermique d'une couche fonctionnelle du matériau de revêtement ; et
l'activation thermique de la couche fonctionnelle du matériau de revêtement (3)
dans lequel l'activation thermique de la couche fonctionnelle du matériau de revêtement (3) a lieu par des ondes électromagnétiques, en particulier des micro-ondes,
**caractérisé en ce que**
les ondes électromagnétiques sont générées par au moins un générateur d'ondes semi-conductrices (11a, 11b, 11c).

2. Procédé selon la revendication 1, qui comprend en supplément les étapes suivantes :
la détection d'au moins une grandeur de processus (Tᵢ, Pᵢ, Nᵢ) du procédé,
la régulation du générateur d'ondes semi-conductrices (11a, 11b, 11c) à l'aide de ladite grandeur de processus (Tᵢ, Pᵢ, Nᵢ).

3. Procédé selon la revendication 2, dans lequel
l'au moins une grandeur de processus (Tᵢ, Pᵢ, Nᵢ) comprend au moins la température de la couche fonctionnelle de la bande de bordure sur un emplacement déterminé avant, pendant ou après l'activation thermique au moyen du générateur d'ondes semi-conductrices (11a, 11b, 11c) ou la puissance, l'amplitude ou la position de phase de micro-ondes entrantes ou réfléchies.

4. Procédé selon la revendication 2 ou la revendication 3, dans lequel
l'au moins une grandeur de processus (Tᵢ, Pᵢ, Nᵢ) comprend plusieurs températures de la couche fonctionnelle de la bande de bordure sur des emplacements déterminés avant, pendant ou après l'activation thermique au moyen du générateur d'ondes semi-conductrices (11a, 11b, 11c) pour permettre ainsi une activation thermique déterminée et définie de la couche fonctionnelle du matériau de revêtement (3).

5. Procédé d'application de matériau de revêtement (3) sur une surface d'une pièce à usiner, en particulier sur une surface étroite, qui présente les étapes suivantes :
l'activation thermique d'une couche fonctionnelle du matériau de revêtement (3) selon un procédé selon l'une quelconque des revendications 1 à 4,
le pressage du matériau de revêtement (3) avec la surface étroite de la pièce à usiner.

6. Dispositif d'application de matériau de revêtement (3) sur une surface étroite d'une pièce à usiner, présentant :
un dispositif de pressage pour presser le matériau de revêtement avec la surface étroite de la pièce à travailler, et
un dispositif (10) d'activation thermique d'une couche fonctionnelle du matériau de revêtement (3), qui présente :
au moins un générateur d'ondes semi-conductrices (11a, 11b, 11c),
dans lequel le générateur d'ondes semi-conductrices (11a, 11b, 11c) est mis au point pour générer des ondes électromagnétiques, préférablement des micro-ondes, qui sont ensuite prévues pour activer thermiquement la couche fonctionnelle du matériau de revêtement (3).

7. Dispositif (10) selon la revendication 6, qui présente en supplément :
un applicateur (12a, 12b, 12c) ;
un conducteur d'ondes qui est en mesure de transmettre des ondes électromagnétiques générées dans le générateur d'ondes semi-conductrices (11a, 11b, 11c) à l'applicateur (12a, 12b, 12c) pour y activer thermiquement la couche fonctionnelle du matériau de revêtement (3).

8. Dispositif (10) selon l'une quelconque des revendications 6 ou 7, présentant en supplément :
un système de détection de valeurs de mesure (15) et un dispositif de commande (16),
dans lequel le système de détection de valeurs de mesure (15) est configuré pour détecter des valeurs de mesure qui sont mesurées lors de l'activation thermique d'une couche fonctionnelle d'un matériau de revêtement (3) et transmettre ensuite lesdites valeurs de mesure au dispositif de commande (16), et
le dispositif de commande (16) est configuré pour réguler ou commander le générateur d'ondes semi-conductrices (11a, 11b, 11c) au moyen de valeurs de mesure reçues.

9. Dispositif (10) selon l'une quelconque des revendications 6 à 8, qui présente en supplément :
un générateur d'ondes semi-conductrices supplémentaire (11a, 11b, 11c) et un applicateur supplémentaire (12a, 12b, 12c),
dans lequel le premier générateur d'ondes semi-conductrices (11a, 11b, 11c) et le générateur d'ondes semi-conductrices supplémentaire (11a, 11b, 11c) sont configurés pour générer des micro-ondes qui sont synchronisées au moyen d'une synchronisation PLL.
